# FASCICULE DE BREVET EUROPEEN

(11) **EP 3 445 599 B1**
(45) Date de publication et mention de la délivrance du brevet: **04.09.2024**
(21) Numéro de dépôt: 17722111.6
(22) Date de dépôt: 19.04.2017
(51) Int. Cl.: B60H 1/00

(54) **COMPOSANT EN MATIERE PLASTIQUE POUR DISPOSITIF DE CHAUFFAGE, DE VENTILATION OU D'AIR CONDITIONNE**
KUNSTSTOFFBAUTEIL FÜR EINE HEIZUNGS-, LÜFTUNGS- ODER KLIMAANLAGE
COMPONENT MADE OF PLASTIC MATERIAL FOR A HEATING, VENTILATING OR AIR CONDITIONING DEVICE

(30) Priorité: 19.04.2016 FR 1653463
(43) Date de publication de la demande: 27.02.2019
(73) Titulaire: Valeo Systemes Thermiques, 78320 Le Mesnil Saint Denis (FR)
(72) Inventeur: LEGROS, Philippe, 78322 Le Mesnil Saint-Denis Cedex (FR); ESCOBEDO, Samuel, 78322 Le Mesnil Saint-Denis Cedex (FR); DOSKOCIL, Petr, 50401 Novy Bydzov (CZ)
(74) Mandataire: Valeo Systèmes Thermiques
(86) Numéro de dépôt international: PCT/FR2017/050923
(87) Numéro de publication internationale: WO 2017/182752

(56) Documents cités:
- JP-B1- 5 770 912
- US-A- 3 223 305

## Description

L'invention concerne un composant en matière plastique pour dispositif de chauffage, de ventilation ou d'air conditionné, en particulier dans le domaine des véhicules automobiles.

De tels composants en matière plastique connus sont pourvus d'agencements de rigidification.

Ils peuvent être constitués d'une paroi d'une épaisseur de 1,2 millimètre, pourvue de nervures de renforcement formées d'une surépaisseur de 1,5 à 1,7 millimètre sur sa face externe.

Ils peuvent également être constitués d'une paroi pourvue de nervures en forme de U sur sa face externe et d'une épaisseur de 1,2 à 1,5 millimètre.

Ces agencements sont d'épaisseur relativement élevée, donc relativement coûteux en matière plastique et donc de poids relativement important. Par ailleurs, ils ne sont pas optimisés en matière de pertes de charge et d'impact sur la vitesse du flux d'air, de la chute de pression et/ou du bruit aéraulique.

L'objet de l'invention est de fournir un composant en matière plastique de haute rigidité relativement aux efforts de torsion et de flexion, tout en étant particulièrement léger.

Pour ce faire, l'invention propose un composant en matière plastique comportant une paroi, caractérisé en ce que cette paroi est conformée au moins partiellement en marches d'escalier, ici ascendantes, l'épaisseur de la paroi au droit des marches étant comprise entre 1 et 1,19 millimètre.

Par marches d'escalier, il est ici entendu un ensemble de marches et de contremarches, la surface de chaque marche étant supérieure à la surface de chaque contremarche.

La plage de valeur pour l'épaisseur de la paroi est particulièrement avantageuse pour réduire le poids tout en augmentant la raideur du composant en plastique, notamment les parois d'un boitier de dispositif de chauffage, de ventilation et/ou d'air conditionné. En effet, la raideur d'un composant en plastique est vérifiée par la formule suivante, R = E x I avec R étant la raideur équivalent de la rigidité, E étant le module d'élasticité de la matière et I étant le moment d'inertie de la forme (I = b x h³/12, b étant la largueur de la paroi, et h étant l'épaisseur de la paroi). Selon la matière utilisée il est important d'avoir un moment d'inertie de la forme d'au moins 1 mm⁴ sans pour autant trop augmenter le poids du boitier. Dans la plupart des composant en plastique utilisé pour former les parois d'un boitier de dispositif de chauffage, de ventilation et/ou d'air conditionné, le tableau suivant a été établi :

| Epaisseur de la paroi (mm) | Moment d'inertie de la forme (mm⁴) |
|---|---|
| 1,5 | 3,38 |
| 1,4 | 2,74 |
| 1,3 | 2,20 |
| 1,2 | 1,73 |
| 1,1 | 1,33 |
| 1 | 1,00 |
| 0,9 | 0,73 |
| 0,8 | 0,51 |
| 0,7 | 0,34 |
| 0,6 | 0,22 |

On remarque en comparant une épaisseur de boitier de 1,0 mm et une épaisseur de 0,8 mm qu'il y a une différence de 0,2 mm ce qui entraîne une baisse de 50% sur le moment d'inertie de la forme et donc une baisse de raideur de 50% également (R = E x I). D'où la raison de rester entre 1 et 1,2 mm en épaisseur nominale paroi de boîtier car cela permet d'alléger le poids du boîtier sans pour autant compromettre la raideur et rigidité du boîtier (R ≥ 1). De plus il y a également un avantage par rapport au procédé de fabrication d'un tel composant, en effet, plus l'épaisseur est fine, plus la section restante pour écoulement de la matière est réduite (effet de peau de figeage instantané du plastique au contact du moule en acier) et plus l'épaisseur est grande, plus il faudra de matière plastique et moins l'écoulement de la matière plastique sera rapide.

Selon un mode de réalisation préféré, l'épaisseur de la paroi est différente selon sa direction.

De préférence, l'angle formé par chaque marche et chaque contremarche supérieure est compris entre 50 et 90 degrés et de préférence entre 70 et 75 degrés.

Avantageusement, l'angle formé par chaque marche et chaque contremarche supérieure est variable d'une marche à l'autre.

L'épaisseur de la paroi au droit des marches et l'épaisseur de la paroi de chaque contremarche est de préférence différente.

L'épaisseur de la paroi au droit des marches peut être sensiblement égale à 1 millimètre et l'épaisseur de chaque contremarche peut être sensiblement égale à 1,5 millimètre.

De préférence, la hauteur de chaque contremarche perpendiculairement à la marche correspondante, est comprise entre 1,5 et 5,5 millimètres.

Avantageusement, le giron de chaque marche est compris entre 10 et 50 millimètres et de préférence entre 30 et 40 millimètres.

Selon l'invention, la hauteur de chaque contremarche est variable d'une marche à l'autre.

La hauteur de chaque contremarche décroit avantageusement d'une marche à la suivante.

De préférence, le composant est en polypropylène.

L'invention concerne également un dispositif de chauffage, de ventilation ou d'air conditionné, en particulier dans le domaine des véhicules automobiles, comportant un tel composant en matière plastique.

L'invention est décrite ci-après plus en détail à l'aide de figures ne représentant qu'un mode de réalisation préféré de l'invention.

Les figures 1 et 2 sont des vues partielles en perspective d'un dispositif de chauffage, de ventilation ou d'air conditionné, dans le domaine des véhicules automobiles.

Les figures 3 et 4 sont une vue en section d'un composant conforme à l'invention.

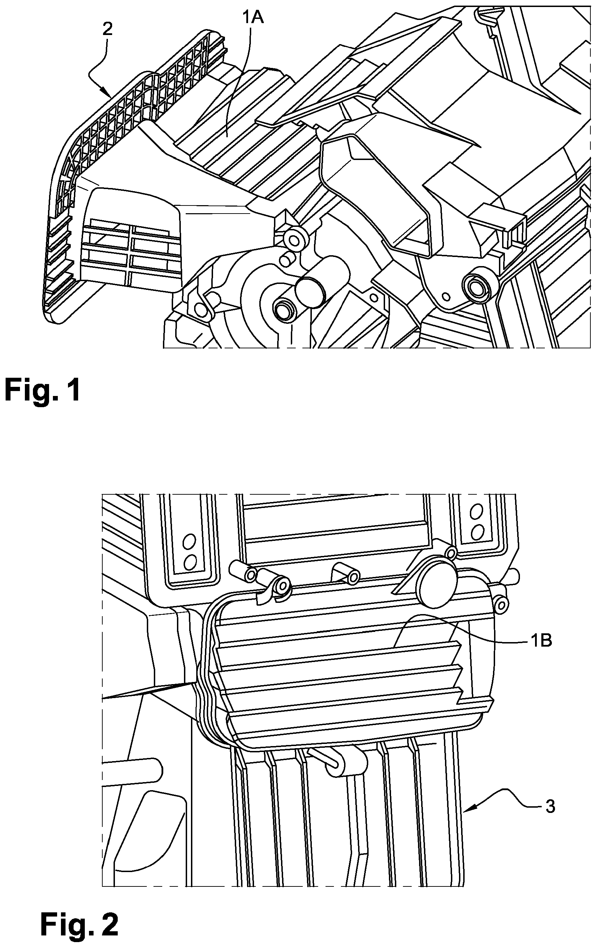

Sur les figures 1 et 2, un dispositif de chauffage, de ventilation ou d'air conditionné, de véhicule automobile, comporte un carter constitué en partie d'un composant en matière plastique 1A, 1B conforme à l'invention. Sur la figure 1, ce composant 1A forme une paroi d'une bouche d'air 2 et, sur la figure 2, ce composant 1B forme une partie de paroi du carter 3.

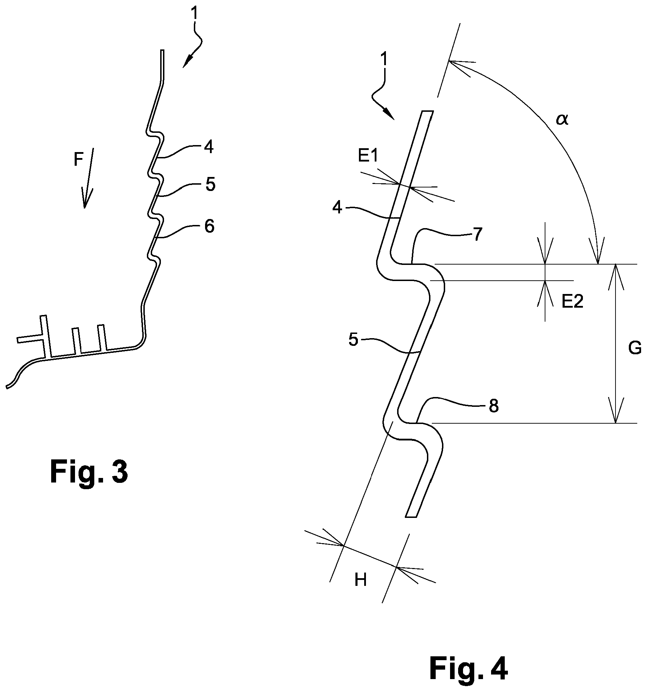

Ce composant est représenté en section sur les figures 3 et 4.

Ce composant 1 en matière plastique, de préférence en polypropylène, comporte une paroi, conformée au moins partiellement en marches d'escalier ascendantes, l'épaisseur E1 de la paroi au droit des marches 4, 5, 6 étant comprise entre 1 et 1,19 millimètre, et de préférence sensiblement égale à 1 millimètre.

L'angle α formé par chaque marche 4 à 6 et chaque contremarche 7, 8 correspondante est compris entre 50 et 90 degrés et de préférence entre 70 et 75 degrés. Cet angle α formé par chaque marche (4, 5) et chaque contremarche supérieure (7, 8) peut être variable d'une marche à l'autre. L'angle α entre les marches 4,7 est de 60° et entre les contremarches 5,8 est de 70° par exemple.

La hauteur H de chaque contremarche 7, 8 perpendiculairement à la marche correspondante, est comprise entre 1,5 et 5,5 millimètres.

L'épaisseur E2 de chaque contremarche 7, 8 est comprise entre 1,5 et 1,2 mm.

Le giron G de chaque marche est compris entre 10 et 50 millimètres et de préférence entre 30 et 40 millimètres.

Comme représenté, la hauteur H de chaque contremarche 7, 8 est variable d'une marche à l'autre et plus précisément décroit d'une marche à la suivante. La hauteur H de la contre marche 7 est égale à 2 mm et la hauteur de la contremarche 8 est de 1,5 mm.

La mise en oeuvre d'un tel composant est effectuée comme suit.

La surface de carter à conformer est divisée en surfaces élémentaires de surface de l'ordre de 35 x 90 millimètres, chaque surfaces élémentaires étant destinées à être conformée d'un composant conforme à l'invention.

Les dimensions du composant et de son profil sont définies en fonction de ces surfaces élémentaires, de la direction de démoulage du carter, de la direction du flux d'air dans la partie de carter correspondante et de la direction de l'effort de flexion agissant sur la surface.

A titre d'exemple, sur la figure 3, est représenté par une flèche F le flux d'air.

En général, les contremarches 7, 8 sont perpendiculaires à la direction du flux d'air intérieur et perpendiculaire à l'effort de flexion agissant sur la surface.

## Revendications

1. Composant en matière plastique (1) pour dispositif de chauffage, de ventilation ou d'air conditionné, en particulier dans le domaine des véhicules automobiles, comportant une paroi, cette paroi est conformée au moins partiellement en marches d'escalier, et il est **caractérisé en ce que** l'épaisseur (E1) de la paroi au droit des marches (4, 5) est comprise entre 1 et 1,19 millimètre, la hauteur (H) de chaque contremarche (7, 8) étant variable d'une marche à l'autre.

2. Composant selon la revendication précédente, **caractérisé en ce que** l'épaisseur (E1, E2) de la paroi est différente selon sa direction.

3. Composant selon l'une des revendications précédentes, **caractérisé en ce que** l'angle (α) formé par chaque marche (4, 5) et chaque contremarche supérieure (7, 8) est compris entre 50 et 90 degrés et de préférence entre 70 et 75 degrés.

4. Composant selon l'une des revendications précédentes, **caractérisé en ce que** l'angle (α) formé par chaque marche (4, 5) et chaque contremarche supérieure (7, 8) est variable d'une marche à l'autre.

5. Composant selon l'une des revendications précédentes, **caractérisé en ce que** l'épaisseur (E1) de la paroi au droit des marches et l'épaisseur (E2) de la paroi de chaque contremarche est différente.

6. Composant selon la revendication précédente, **caractérisé en ce que** l'épaisseur (E1) de la paroi au droit des marches est sensiblement égale à 1 millimètre et l'épaisseur (E2) de chaque contremarche est sensiblement égale à 1,5 millimètre.

7. Composant selon l'une des revendications précédentes, **caractérisé en ce que** la hauteur (H) de chaque contremarche (7, 8) perpendiculairement à la marche correspondante, est comprise entre 1,5 et 5,5 millimètres.

8. Composant selon l'une des revendications précédentes, **caractérisé en ce que** le giron (G) de chaque marche est compris entre 10 et 50 millimètres et de préférence entre 30 et 40 millimètres.

9. Composant selon l'une des revendications précédentes, **caractérisé en ce que** la hauteur (H) de chaque contremarche (7, 8) décroit d'une marche à la suivante.

10. Composant selon l'une des revendications précédentes, **caractérisé en ce qu'**il est en propylène.

11. Dispositif de chauffage, de ventilation ou d'air conditionné, en particulier dans le domaine des véhicules automobiles, comportant un composant en matière plastique (1A, 1B) selon l'une des revendications précédentes.

## Patentansprüche

1. Komponente aus Kunststoff (1) für eine Heizungs-, Lüftungs- oder Klimaanlage, insbesondere im Bereich der Kraftfahrzeuge, welche eine Wand aufweist, wobei diese Wand wenigstens teilweise treppenförmig ausgebildet ist, **dadurch gekennzeichnet, dass** die Dicke (E1) der Wand an den Stufen (4, 5) zwischen 1 und 1,19 Millimetern liegt, wobei die Höhe (H) jeder Setzstufe (7, 8) von einer Stufe zur anderen variabel ist.

2. Komponente nach dem vorhergehenden Anspruch, **dadurch gekennzeichnet, dass** die Dicke (E1, E2) der Wand je nach ihrer Richtung unterschiedlich ist.

3. Komponente nach dem vorhergehenden Anspruch, **dadurch gekennzeichnet, dass** der Winkel (α), der von jeder Stufe (4, 5) und jeder darüber befindlichen Setzstufe (7, 8) gebildet wird, zwischen 50 und 90 Grad und vorzugsweise zwischen 70 und 75 Grad liegt.

4. Komponente nach einem der vorhergehenden Ansprüche, **dadurch gekennzeichnet, dass** der Winkel (α), der von jeder Stufe (4, 5) und jeder darüber befindlichen Setzstufe (7, 8) gebildet wird, von einer Stufe zur anderen variabel ist.

5. Komponente nach einem der vorhergehenden Ansprüche, **dadurch gekennzeichnet, dass** die Dicke (E1) der Wand an den Stufen und die Dicke (E2) der Wand jeder Setzstufe verschieden sind.

6. Komponente nach dem vorhergehenden Anspruch, **dadurch gekennzeichnet, dass** die Dicke (E1) der Wand an den Stufen im Wesentlichen gleich 1 Millimeter ist und die Dicke (E2) jeder Setzstufe im Wesentlichen gleich 1,5 Millimeter ist.

7. Komponente nach einem der vorhergehenden Ansprüche, **dadurch gekennzeichnet, dass** die Höhe (H) jeder Setzstufe (7, 8) senkrecht zur entsprechenden Stufe zwischen 1,5 und 5,5 Millimetern liegt.

8. Komponente nach einem der vorhergehenden Ansprüche, **dadurch gekennzeichnet, dass** die Trittbreite (G) jeder Stufe zwischen 10 und 50 Millimetern und vorzugsweise zwischen 30 und 40 Millimetern liegt.

9. Komponente nach einem der vorhergehenden Ansprüche, **dadurch gekennzeichnet, dass** die Höhe (H) jeder Setzstufe (7, 8) von einer Stufe zur nächsten abnimmt.

10. Komponente nach einem der vorhergehenden Ansprüche, **dadurch gekennzeichnet, dass** sie aus Propylen besteht.

11. Heizungs-, Lüftungs- oder Klimaanlage, insbesondere im Bereich der Kraftfahrzeuge, welche eine Komponente aus Kunststoff (1A, 1B) nach einem der vorhergehenden Ansprüche aufweist.

## Claims

1. Component made of plastic material (1) for a heating, ventilation or air-conditioning device, in particular in the field of motor vehicles, having a wall, this wall is shaped at least partially into staircase steps, and it is **characterized in that** the thickness (E1) of the wall at the steps (4, 5) is between 1 and 1.19 millimetres, the height (H) of each riser (7, 8) being variable from one step to another.

2. Component according to the preceding claim, **characterized in that** the thickness (E1, E2) of the wall is different depending on the direction thereof.

3. Component according to one of the preceding claims, **characterized in that** the angle (α) formed by each step (4, 5) and each higher riser (7, 8) is between 50 and 90 degrees and preferably between 70 and 75 degrees.

4. Component according to one of the preceding claims, **characterized in that** the angle (α) formed by each step (4, 5) and each higher riser (7, 8) is variable from one step to another.

5. Component according to one of the preceding claims, **characterized in that** the thickness (E1) of the wall at the steps and the thickness (E2) of the wall of each riser is different.

6. Component according to the preceding claim, **characterized in that** the thickness (E1) of the wall at the steps is substantially equal to 1 millimetre and the thickness (E2) of each riser is substantially equal to 1.5 millimetres.

7. Component according to one of the preceding claims, **characterized in that** the height (H) of each riser (7, 8) perpendicular to the corresponding step is between 1.5 and 5.5 millimetres.

8. Component according to one of the preceding claims, **characterized in that** the tread (G) of each step is between 10 and 50 millimetres and preferably between 30 and 40 millimetres.

9. Component according to one of the preceding claims, **characterized in that** the height (H) of each riser (7, 8) decreases from one step to the next.

10. Component according to one of the preceding claims, **characterized in that** it is made of propylene.

11. Heating, ventilation or air-conditioning device, in particular in the field of motor vehicles, having a component made of plastic material (1A, 1B) according to one of the preceding claims.
